# EUROPÄISCHE PATENTSCHRIFT

(11) **EP 1 353 067 B1**
(45) Veröffentlichungstag und Bekanntmachung des Hinweises auf die Patenterteilung: **05.08.2009**
(21) Anmeldenummer: 03016185.5
(22) Anmeldetag: 25.10.2000
(51) Int. Cl.: F04B 17/03

(54) **Motor-Pumpen-Aggregat**
Motor pump unit
Groupe moto-pompe

(30) Priorität: 25.10.1999 DE 19951446
(43) Veröffentlichungstag der Anmeldung: 15.10.2003
(62) Teilanmeldung aus: 00983090.2
(73) Patentinhaber: Continental Teves AG & Co. oHG, 60488 Frankfurt (DE)
(72) Erfinder: Dinkel, Dieter, 65824 Schwalbach (DE); Reinartz, Hans-Dieter, 60439 Frankfurt/Main (DE); Volz, Peter, Dr., 64291 Darmstadt (DE); Briesewitz, Rüdiger, 60385 Frankfurt/Main (DE)
(74) Vertreter: Neumann, Stephan

(56) Entgegenhaltungen:
- EP-A- 0 921 048

## Beschreibung

Die vorliegende Erfindung betrifft ein Elektromotor-Kolbenpumpen-Aggregat nach dem Oberbegriff des Patentanspruchs 1.

Aus der Offenlegungsschrift DE 196 32 167 A1 ist ein Elektromotor-Kolbenpumpen-Aggregat bekannt, das insbesondere für elektronisch geregelte Bremssysteme von Kraftfahrzeugen geeignet ist, und einen Elektromotor mit einer Halteplatte, z.B. für Kontaktbürsten, und eine Kolbenpumpe umfaßt, wobei Kolben der Kolbenpumpe über einen Exzenter antreibbar sind.

Für die Funktion des Elektromotor-Kolbenpumpen-Aggregates ist eine elektrische Verbindung zwischen dem Elektromotor zum Antrieb der Kolbenpumpe und einem elektronischen Regler in einem Reglergehäuse unerlässlich. Zum Schutz des elektrischen Verbindungselementes wurde daher bereits eine integrierte Durchführung durch das Pumpengehäuse vorgeschlagen. Die Herstellung der elektrischen Verbindung innerhalb der Endmontage der beteiligten Bauteile- Elektromotor, Pumpengehäuse und Regler - ist verbesserungswürdig, weil sich eine Fülle von Bauteiltoleranzen summieren, welche unter zusätzlicher Berücksichtigung von werkstoffabhängigen Temperaturausdehnungskoeffizienten eine zuverlässige elektrische Kontaktierung beeinträchtigen können.

Aus der gattungsbildenden EP 0 921 048 A1 geht ein Elektromotor-Kolbenpumpen-Aggregat mit den Merkmalen von dem Oberbegriff von dem unabhängigen Patentanspruch 1 hervor.

Es besteht das Problem, eine toleranzarme und sichere Kontaktierung von dem Elektromotor zu ermöglichen, und gleichzeitig einen Innenraum von dem Elektromotor besser vor dem Eindringen von festen oder flüssigen Medien, insbesondere vor Leckageflüssigkeit der Kolbenpumpe, zu schützen.

Zur Lösung des Problems dienen die Merkmale im Kennzeichen von Patentanspruch 1. Die Kontaktklemme ist vorzugsweise schwimmend in einem Pumpengehäuse der Halteplatte vorgesehen. Eine toleranzarme und dennoch sichere elektrische Verbindung wird ermöglicht, indem die Kontaktklemme im wesentlichen U-förmig ausgebildet ist, und zwei gegeneinander federnde Schenkel zur Kontaktierung des Verbindungselementes aufweist.

Weitere Vorteile und Ausgestaltungen der Erfindung ergeben sich aus Unteransprüchen, die nachstehend anhand der Ausführungsbeispiele in Zusammenhang mit den zugehörigen Zeichnungen näher erläutert werden. Es zeigen:
- Fig. 1: ein Elektromotor-Kolbenpumpen-Aggregat im Längsschnitt, und
- Fig. 2: eine perspektivische Darstellung einer Halteplatte des Elektromotor-Kolbenpumpen-Aggregates.

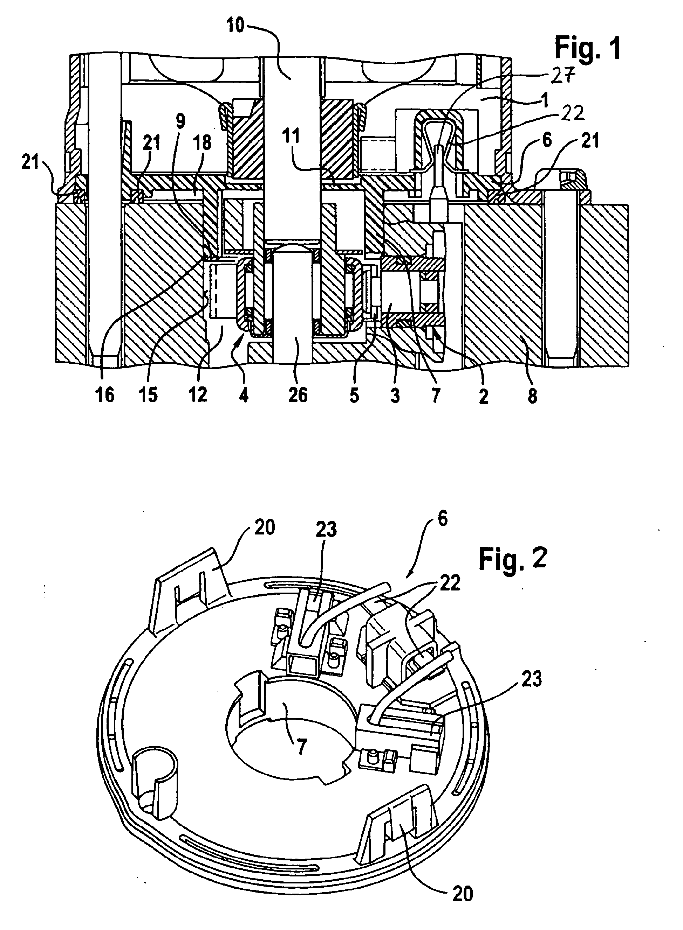

In Fig. 1 ist ein Elektromotor mit 1 und eine Kolbenpumpe mit 2 bezeichnet. Im Gehäuse des Elektromotors ist eine Antriebswelle 10 angeordnet, die bis in ein Pumpengehäuse 8 der Kolbenpumpe 2 hineinragt. Ferner ist zwischen dem Elektromotor 1 und dem Pumpengehäuse 8 eine Halteplatte 6 vorgesehen, beispielsweise für nicht dargestellte Kontaktbürsten des Elektromotors 1. Im Pumpengehäuse 8 der Kolbenpumpe 2 ist, hier nur beispielhaft genannt und für die Erfindung nicht einschränkend, eine Stützachse 26 befestigt, auf der ein Exzenter 4 angeordnet ist. Durch den mit der Antriebswelle 10 mit drehenden Exzenter 4 werden Kolben 3 der Kolbenpumpe 2 radial zur Antriebswelle 10 hin und her bewegt, um so den, beispielsweise für den Betrieb eines elektronisch geregelten Bremssystems für Kraftfahrzeuge erforderlichen, Druck aufzubauen. Die Kolben 3 sind durch einen Kuppelring 5 miteinander verbunden, so daß ein Kolben 3 aufgrund des Exzenters 4 eine Druckhubbewegung ausführt, während der andere Kolben (nicht dargestellt) durch den Kuppelring 5 zurückgezogen wird und eine Saughubbewegung ausführt. Der Kuppelring 5 rotiert also nicht mit dem Exzenter 4, sondern oszilliert in der Bewegungsebene der Kolben 3. Dabei ist es möglich, daß sich der Kuppelring 5 um die Befestigungspunkte an den Kolben 3 verdreht (nicht gezeigt), insbesondere beim Anlauf des Elektromotors 1 bzw. der Kolbenpumpe 2.

An der Halteplatte 6 des Elektromotors 1 ist ein Vorsprung 7 vorgesehen, der sich bis in den Bewegungsbereich des Kuppelringes 5 erstreckt. Hierdurch wird neben der Zentrierung der Halteplatte 6 im Pumpengehäuse 8 ein feststehender Anschlag für den Kuppelring 5 geschaffen und so erfindungsgemäß und mit besonderem Vorteil die im Betrieb auftretende Reibung sowie Laufgeräusche der Kolbenpumpe 2 reduziert.

Das Ende des Vorsprunges 7 selbst kann dabei als Anschlag für den Kuppelring 5 dienen, wenn das Material eine entsprechende Abriebfestigkeit aufweist. Der Vorsprung 7 ist gemeinsam mit der Halteplatte 6 insbesondere aus Kunststoff hergestellt. Alternativ dazu kann am Vorsprung 7 jedoch auch ein separater Anschlag bzw. Anlauf 9 für den Kuppelring 5 vorgesehen sein. Dieser besteht dann aus einem geeigneten Werkstoff, beispielsweise aus Blech.

Der Vorsprung 7 ist kreisringförmig ausgebildet und um die in das Pumpengehäuse 8 hineinragende Antriebswelle 10 des Elektromotors 1 herum angeordnet. Alternativ dazu kann der Vorsprung 7 auch einzelne Abschnitte aufweisen (nicht gezeigt), die beispielsweise als Anschlag dienen und bis in den Bewegungsbereich des Kuppelringes 5 ragen.

Punkt der vorliegenden Erfindung ist die wirksame Trennung von Kolbenpumpe 2 bzw. Kurbelraum, d.h. der Raum, in dem der Exzenter 4 angeordnet ist, und Elektromotor 1, wobei das Eindringen von flüssigen und/oder festen Medien in den Innenraum des Elektromotors 1, in dem elektronische Bauteile angeordnet sind, unbedingt zu vermeiden ist. Mit besonderem Vorteil ist deshalb zwischen dem Vorsprung 7 und der Antriebswelle 10 eine Schottwand 11 vorgesehen, die das Eindringen von Fremdmedien in den Elektromotorinnenraum verhindert bzw. erschwert. Die Schottwand 11 kann, wie in Fig. 1 gezeigt, beispielsweise einstückig mit der Halteplatte 6 ausgebildet sein.

Neben der Funktion als Anschlag für den Kuppelring 5 weist der bis in den Bewegungsbereich des Kuppelringes 5 ragende Vorsprung 7 der Halteplatte 6 noch einen weiteren wesentlichen Vorteil auf. Im Kurbelraum sammelt sich nämlich während des Betriebes des Elektromotor-Kolbenpumpen-Aggregates stets Leckageflüssigkeit 13 der Kolbenpumpe 2. Wenn im Pumpengehäuse 8 der Kolbenpumpe 2 einen Auslaßkanal 12 für die Leckageflüssigkeit 13 vorgesehen ist, an dessen dem Exzenter 4 bzw. dem Kurbelraum abgewandten Ende insbesondere noch ein Auslaßmittel 14 angeordnet ist, so kann diese Leckageflüssigkeit 13 aus dem Kurbelraum nach außen ablaufen, z.B. in ein nicht dargestelltes Reglergehäuse, in dem beispielsweise eine elektronische Regelung für das Elektromotor-Kolbenpumpen-Aggregat untergebracht ist.

Dieser Ablauf bzw. Auslaßkanal 12 genügt den Anforderungen, wenn das Elektromotor-Kolbenpumpen-Aggregat in der in Fig. 1 gezeigten Weise, beispielsweise in ein Kraftfahrzeug, eingebaut ist.

Fig. 2 zeigt eine Halteplatte 6 in perspektivischer Darstellung. Neben dem bereits oben erwähnten Vorsprung 7 weist die Halteplatte 6 als Schnittstelle zwischen Elektromotor 1 und Kolbenpumpe 2 eine Reihe von weiteren Vorteilen auf. So ist eine Kontaktklemme 22 zum Ausgleich von Wärmedehnungen im elektrischen Verbindungssystem und Toleranzausgleich in einem nicht bezeichneten Gehäuse schwimmend gelagert direkt an der Halteplatte 6 integriert angeordnet. Dadurch wird an der Halteplatte 6 eine einfache elektrische Kontaktierung für ein einfaches elektrisches Verbindungselement 27, z.B. ein Kabelende, geschaffen, so daß eine elektrische Entstörung auch direkt an der Halteplatte 6 vorgenommen werden kann. Ebenso sind Kontaktbürstengehäuse 23 direkt an der Halteplatte 6 angebracht.

Zur Verbindung mit dem Gehäuse des Elektromotors 1 können an der Halteplatte 6 des weiteren ein oder mehrere Schnapphaken 20 integriert vorgesehen sein. Weiterhin können beispielsweise eine oder mehrere angespritzte Dichtungen 21 (siehe Fig. 1 und 2), z.B. aus Silikon, an der Halteplatte 6 integriert sein, die das Eindringen von Fremdmedien von außen in das Aggregat wirksam verhindern. Schließlich kann die Halteplatte 6 auch eine Halte- bzw. Sicherungsfunktion für einen nicht bezeichneten Rotor bzw. einen ebenfalls nicht bezeichneten, schwebenden Anker des Elektromotors 1 bei dessen Transport erfüllen.

## Patentansprüche

1. Elektromotor-Pumpen-Aggregat mit einem Elektromotor (1), mit einer Kolbenpumpe (2) in einem Pumpengehäuse (8), und mit einem Reglergehäuse, insbesondere für elektronisch geregelte Bremssysteme von Kraftfahrzeugen, wobei Kolben (3) über einen, mit einer Antriebswelle (10) des Elektromotors (1) verbundenen Exzenter (4) antreibbar sind, und wobei der Elektromotor (1) eine Halteplatte (6) für Kontaktbürsten sowie für eine integrierte Kontaktklemme (22) zur elektrischen Kontaktierung eines, durch das Pumpengehäuse (8) geführten, elektrischen Verbindungselementes (27) aufweist, und wobei die Halteplatte (6) einen kreisringförmig um die Antriebswelle (10) angeordneten Vorsprung (7) aufweist, **dadurch gekennzeichnet, dass** zwischen Vorsprung (7) und Antriebswelle (10) eine Schottwand (11) vorgesehen ist, um ein Eindringen von Fremdmedien in einen Motorinnenraum zu verhindern.

2. Elektromotor- Pumpen-Aggregat nach Anspruch 1, **dadurch gekennzeichnet, dass** die Halteplatte (6) aus Kunststoff hergestellt ist, und dass die Schottwand (11) einstückig mit der Halteplatte (6) ausgebildet ist.

3. Elektromotor-Pumpen-Aggregat nach einem oder mehreren der vorhergehenden Ansprüche, **dadurch gekennzeichnet, dass** ein Auslasskanal (12), insbesondere mit Auslassmitteln (14), vorgesehen ist, um Leckageflüssigkeit aus einem Kurbelraum des Pumpengehäuse (8) nach außen, insbesondere in das Reglergehäuse, oder insbesondere in ein Reservoir (18) zwischen Pumpengehäuse (8) und Halteplatte (6), ablaufen zu lassen.

4. Elektromotor-Pumpen-Aggregat nach Anspruch 3, **dadurch gekennzeichnet, dass** ein Auslassmittel (14) an einem, dem Exzenter (4) oder Kurbelraum abgewandten Ende angeordnet ist.

5. Elektromotor-Pumpen-Aggregat nach einem oder mehreren der vorhergehenden Ansprüche, **dadurch gekennzeichnet, dass** an der Halteplatte (6) eine oder mehrere Dichtungen (21) integriert angeordnet, insbesondere angespritzt, sind, und dass diese Dichtung (21) vorzugsweise aus Silikon besteht.

6. Motor-Pumpen-Aggregat nach Anspruch 1, **dadurch gekennzeichnet, dass** die Kontaktklemme (22) in einem Gehäuse der Halteplatte (6) integriert angeordnet ist.

7. Motor-Pumpen-Aggregat nach Anspruch 6, **dadurch gekennzeichnet, dass** die Kontaktklemme (22) für einen Toleranzausgleich in dem Gehäuse schwimmend gelagert ist.

8. Motor-Pumpen-Aggregat nach Anspruch 1, **dadurch gekennzeichnet, dass** die Kontaktklemme (22) im wesentlichen U-förmig ausgebildet ist, und zwei gegeneinander federnde Schenkel zur elektrischen Kontaktierung des elektrischen Verbindungselementes (27) aufweist.

9. Motor-Pumpen-Aggregat nach einem der Ansprüche 1, **dadurch gekennzeichnet, dass** Mittel zur Entstörung direkt an der Halteplatte (6) vorgesehen sind.

10. Motor-Pumpen-Aggregat nach Anspruch 1, **dadurch gekennzeichnet, dass** die Halteplatte (6) direkt daran angeordnete Kontaktbürstengehäuse (23) aufweist.

## Claims

1. Electric-motor/pump assembly with an electric motor (1), with a piston pump (2) in a pump casing (8), and with a controller casing, in particular for electronically controlled brake systems of motor vehicles, pistons (3) being drivable via an eccentric (4) connected to a driveshaft (10) of the electric motor (1), the electric motor (1) having a holding plate (6) for contact brushes and for an integrated contact terminal (22) for the electrical contacting of an electrical connection element (27) guided through the pump casing (8), and the holding plate (6) having a projection (7) arranged annularly around the driveshaft (10), **characterized in that** a bulkhead (11) is provided between the projection (7) and driveshaft (10) in order to prevent foreign media from penetrating into the motor inner space.

2. Electric-motor/pump assembly according to Claim 1, **characterized in that** the holding plate (6) is produced from plastic, and **in that** the bulkhead (11) is formed in one piece with the holding plate (6).

3. Electric-motor/pump assembly according to one or more of the preceding claims, **characterized in that** an outlet duct (12), in particular with outlet means (14), is provided in order to cause leakage liquid to run off from a crank space of the pump casing (8) outwards, in particular into the controller casing, or, in particular, into a reservoir (18) between the pump casing (8) and holding plate (6).

4. Electric-motor/pump assembly according to Claim 3, **characterized in that** an outlet means (14) is arranged at an end facing away from the eccentric (4) or crank space.

5. Electric-motor/pump assembly according to one or more of the preceding claims, **characterized in that** one or more seals (21) are arranged, integrated, in particular injection-moulded, on the holding plate (6), and **in that** this seal (21) preferably consists of silicone.

6. Motor/pump assembly according to Claim 1, **characterized in that** the contact terminal (22) is arranged, integrated, in a casing of the holding plate (6).

7. Motor/pump assembly according to Claim 6, **characterized in that** the contact terminal (22) is mounted floatingly in the casing for tolerance compensation.

8. Motor/pump assembly according to Claim 1, **characterized in that** the contact terminal (22) is of essentially U-shaped design and has two mutually resilient legs for the electrical contacting of the electrical connection element (27).

9. Motor/pump assembly according to Claim 1, **characterized in that** means for interference suppression are provided directly on the holding plate (6).

10. Motor/pump assembly according to Claim 1, **characterized in that** the holding plate (6) has contact-brush casings (23) arranged directly on it.

## Revendications

1. Groupe pompe-moteur électrique, qui présente :
un moteur électrique (1),
une pompe à piston (2) dans un boîtier de pompe (8) et
un boîtier de régulateur, en particulier pour systèmes de freinage à régulation électronique de véhicules automobiles,
dans lequel
des pistons (3) peuvent être entraînés par un excentrique (4) relié à un arbre d'entraînement (10) du moteur électrique (1),
le moteur électrique (1) présente une plaque de support (6) pour des balais de contact et pour une borne intégrée de contact (22) qui assure le contact électrique avec un élément (27) de raccordement électrique guidé à travers le boîtier de pompe (8),
la plaque de support (6) présente une saillie (7) disposée en anneau circulaire autour de l'arbre d'entraînement (10),
**caractérisé en ce que**
il présente une cloison (11) prévue entre la saillie (7) et l'arbre d'entraînement (10) pour empêcher la pénétration de fluide étranger dans l'espace intérieur du moteur.

2. Groupe pompe-moteur électrique selon la revendication 1, **caractérisé en ce que** la plaque de support (6) est réalisée en matière synthétique et **en ce que** la cloison (11) est formée d'un seul tenant avec la plaque de support (6).

3. Groupe pompe-moteur électrique selon une ou plusieurs de revendications précédentes, **caractérisé en ce qu'**il présente un canal de sortie (12), en particulier doté de moyens de sortie (14) pour permettre au liquide de fuite de sortir du carter de vilebrequin du boîtier de pompe (8), en particulier dans le boîtier du régulateur ou en particulier dans un réservoir (18) situé entre le boîtier de pompe (8) et la plaque de support (6).

4. Groupe pompe-moteur électrique selon la revendication 3, **caractérisé en ce qu'**un moyen de sortie (14) est disposé sur une extrémité non tournée vers l'excentrique (4) ou le carter de vilebrequin.

5. Groupe pompe-moteur électrique selon une ou plusieurs de revendications précédentes, **caractérisé en ce qu'**un ou plusieurs joints d'étanchéité (21) sont intégrés sur la plaque de support (6), en particulier par injection, et **en ce que** ces joints d'étanchéité (21) sont de préférence réalisés en silicone.

6. Groupe pompe-moteur électrique selon la revendication 1, **caractérisé en ce que** la borne de contact (22) est intégrée dans un boîtier de la plaque de support (6).

7. Groupe pompe-moteur électrique selon la revendication 6, **caractérisé en ce que** pour compenser les tolérances, la borne de contact (22) est montée de manière flottante dans le boîtier.

8. Groupe pompe-moteur électrique selon la revendication 1, **caractérisé en ce que** la borne de contact (22) est configurée essentiellement en forme de U et présente deux ailes élastiques d'une par rapport à l'autre pour assurer le contact électrique avec l'élément (27) de raccordement électrique.

9. Groupe pompe-moteur électrique selon la revendication 1, **caractérisé en ce que** des moyens de déparasitage sont prévus directement sur la plaque de support (6).

10. Groupe pompe-moteur électrique selon la revendication 1, **caractérisé en ce que** des boîtiers (23) de balai de contact sont disposés directement sur la plaque de support (6).
